# EUROPÄISCHE PATENTSCHRIFT

(11) **EP 2 666 803 B1**
(45) Veröffentlichungstag und Bekanntmachung des Hinweises auf die Patenterteilung: **05.09.2018**
(21) Anmeldenummer: 12168988.9
(22) Anmeldetag: 23.05.2012
(51) Int. Cl.: C08G 69/26, C08L 77/06

(54) **Kratzfeste, transparente und zähe Copolyamidformmassen, hieraus hergestellte Formkörper und deren Verwendung**
Scratch-proof, transparent and ductile copolyamide moulding materials, moulded parts produced from same and use of same
Masses de formage copolyamides dures, transparentes et résistant aux rayures, corps de formage en étant issus et leur utilisation

(43) Veröffentlichungstag der Anmeldung: 27.11.2013
(73) Patentinhaber: EMS-PATENT AG, 7013 Domat / Ems (CH)
(72) Erfinder: Bühler, Friedrich Severin, 7430 Thusis (CH)
(74) Vertreter: Pfenning, Meinig & Partner mbB

(56) Entgegenhaltungen:
- EP-A1- 0 837 087
- EP-A1- 1 845 123
- EP-B1- 0 725 100
- WO-A1-2006/122602
- US-A- 6 008 288

## Beschreibung

Die Erfindung betrifft kratzfeste, transparente und zähe Copolyamidformmassen, die sich durch eine hohe Kratzfestigkeit, exzellente Transparenz und hohe Zähigkeit auszeichnen. Mit den transparenten amorphen Copolyamidformmassen nach der Erfindung lassen sich transparente Formkörper oder transparente Beschichtungen herstellen, die zudem ausgezeichnete mechanische Eigenschaften aufweisen. Die transparenten amorphen Copolyamidformmassen nach der Erfindung werden erhalten durch Polykondensation eines Carbonsäuregemisches, enthaltend oder bestehend aus mindestens einer aliphatischen Dicarbonsäure mit 6 bis 18 Kohlenstoffatomen und mindestens einer aromatischen Dicarbonsäure, ausgewählt aus der Gruppe bestehend aus Isophthalsäure, Terephthalsäure und/oder Naphthalindicarbonsäure und mindestens einem cycloaliphatischen Diamin, ausgewählt aus der Gruppe bestehend aus 3,3'-Dimethyl-4,4'-diaminocyclohexylmethan (DMDC), 3,3',5,5'-Tetramethyl-4,4'-diaminocyclohexylmethan, 2,2',3,3'-Tetramethyl-4,4'-diaminocyclohexylmethan und/oder Norbornandiamin. Die Erfindung betrifft weiterhin hieraus hergestellte Formteile oder Beschichtungen sowie die Verwendung der transparenten amorphen Copolyamidformmassen zur Herstellung von transparenten Formkörpern oder transparenten Beschichtungen, welche insbesondere in den Bereichen Industrie, Haushalt, Sanitär, Optik, Uhren, Elektro, Elektronik, Beleuchtung, Fahrzeuge, Maschinenbau, Verpackung, Mode, Textil, Sport und Freizeit, Mess- und Prüfmittel, Spielwaren und Design Verwendung finden.

Transparente amorphe Copolyamidformmassen und daraus herstellbare transparente amorphe Polyamidformkörper sind im Stand der Technik bekannt. Grundsätzlich werden dabei im Bereich der transparenten Polyamide zwei Polymertypen unterschieden, und zwar zum einen mikrokristalline transparente Polyamide sowie amorphe transparente Polyamide.

Mikrokristalline transparente Copolyamidformmassen und deren Verwendung für Brillengestelle, Apparateschaugläser sowie -abdeckungen und Leuchtenabdeckungen sind z.B. aus der DE 43 10 970 A1 bekannt. Die dort beschriebenen Polyamide werden aus 4,4'-Diaminocyclohexylmethan als Diaminkomponente und Dodecandisäure als Säurekomponente hergestellt.

In der EP 1 595 907 A1 sind weiterhin transparente amorphe Polyamide beschrieben, die auf Diaminen und einer C14-Dicarbonsäure basieren.

Aus der EP 0 725 101 A1 sind zudem transparente, amorphe Polyamide bekannt mit u.a. ausgezeichneter Spannungsrissbeständigkeit in den meisten Lösungsmitteln.

Hinsichtlich der Kratzfestigkeit sind die zuvor genannten Polymertypen jedoch nachteilig. Um dieses Problem zu lösen, schlägt die EP 2 093 255 A2 vor, transparente Polyamide durch spezielle Zusatzstoffe kratzfest auszurüsten.

Die WO 2008/025703 A1 beschreibt Copolyamidformmassen als Beschichtung von Polycarbonat. Es werden dadurch Gegenstände ermöglicht, die spannungsrissunempfindlich, kratzfest und abriebfest sind. Die Polyamide werden ab Seite 2, Zeile 6 näher beschrieben, wobei nicht offenbart wird, ob es sich bei den genannten Polyamiden um transparente oder opake Polyamide handelt.

Aus der US 6, 008,288 sind farblose, amorphe Polyamide ihre Blends oder Legierungen sowie hieraus gebildete Formkörper mit hohen Wechselbiegefestigkeiten bekannt, die aus Polyamiden, gebildet aus cycloaliphatischen Diaminen mit aliphatischen Dicarbonsäuren sowie geringen Mengen an aromatischen Dicarbonsäuren hergestellt werden.

Die WO 2006/122602 A1 beschreibt eine Polyamidformmasse, die mindestens ein thermoplastisches Polyamid und mindestens ein Polyamid-Oligomer mit linearer oder verzweigter Kettenstruktur beinhaltet.

Aus der EP 0 725 100 B1 sind farblose, transparente Copolyamide, ihre Herstellung sowie Formkörper aus diesen Copolyamiden, ihren Blends oder Legierungen bekannt.

Die EP 1 845 123 A1 betrifft transparente, amorphe Polyamidformmassen und deren Verwendung.

Zudem beschreibt die EP 0 837 087 A1 die Verwendung von Polyamidformmassen, deren Legierungen oder Blends zur Herstellung von Formkörpern für optische oder elektrooptische Anwendungen.

Es hat sich nun gezeigt, dass jedoch die vorbekannten transparenten Copolyamidformmassen Nachteile aufweisen. Es hat sich insbesondere herausgestellt, dass die Kratzfestigkeit der aus den transparenten Copolyamidformmassen hergestellten Formkörpern nicht immer befriedigend ist. Die Copolyamidformmasse soll eine möglichst hohe Kratzfestigkeit aufweisen, um insbesondere eine hohe Lebensdauer und andauernde Transparenz der hieraus hergestellten Formkörper zu gewährleisten. Wesentlich dabei ist, dass auch die mechanischen Eigenschaften der hergestellten Formkörper hoch sind, vor allem die Zähigkeit z.B. wiedergegeben durch die Kerbschlagzähigkeit, die Reißdehnung und/oder die Schlagzähigkeit. Wesentlich für die transparenten Formkörper ist weiterhin, dass sie eine möglichst hohe Transparenz aufweisen. Diesen Forderungen, in ihrer Gesamtheit, haben die bisher bekannten Copolyamidformmassen nicht entsprochen.

Somit war es Aufgabe der vorliegenden Erfindung, eine Copolyamidformmasse bereitzustellen, die auch ohne den Zusatz von Additiven eine hohe Kratzfestigkeit und Transparenz aufweist. Zudem soll die erfindungsgemäße Copolyamidformmasse sich ebenso durch gute mechanische Eigenschaften auszeichnen.

Diese Aufgabe wird bezüglich einer Copolyamidformmasse mit den Merkmalen des Anspruchs 1, bezüglich eines Formteils oder einer Beschichtung, das bzw. die aus der erfindungsgemäßen Copolyamidformmasse hergestellt ist, mit den Merkmalen des Patentanspruchs 14 sowie bezüglich Verwendungsmöglichkeiten der erfindungsgemäßen Copolyamidformmasse mit den Merkmalen des Patentanspruchs 16 gelöst. Dabei stellen die jeweiligen abhängigen Patentansprüche vorteilhafte Weiterbildungen dar.

Erfindungsgemäß wird somit eine transparente, kratzfeste und zähe Copolyamidformmasse bereitgestellt, die durch Polykondensation mit einem Dicarbonsäure-Gemisch, bestehend aus mindestens eine aliphatische Dicarbonsäure mit 6 bis 18 Kohlenstoffatomen und mindestens eine aromatischen Dicarbonsäure, ausgewählt aus der Gruppe bestehend aus Isophthalsäure, Terephthalsäure und/oder Naphthalindicarbonsäure herstellbar ist. Die erfindungsgemäße Copolyamidformmasse zeichnet sich überraschender Weise aus durch eine hohe Kratzfestigkeit, die größer oder gleich der Bleistifthärte Stufe H, bevorzugt größer oder gleich Stufe 2H ist, gemessen nach ASTM D3363-05 an konditionierten Prüfplättchen aus.

Es hat sich nun gezeigt, dass nur bei Auswahl dieser spezifischen Komponenten transparente amorphe Copolyamidformmassen erhalten werden, die Eigenschaften aufweisen, die in ihrer Gesamtheit gegenüber den im Stand der Technik bekannten Formmassen deutlich überlegen sind.

Transparent bedeutet hierbei eine Lichttransmission gemessen nach ASTM D1003 bei einer Prüfkörperdicke von 2 mm von mindestens 80 %, bevorzugt von mindestens 90 %.

Amorph bedeutet hierbei eine Schmelzwärme gemessen nach ISO 11357 von maximal 5 J/g, bevorzugt maximal 3 J/g und besonders bevorzugt maximal 1 J/g.

Die Erfindung umfasst dabei auch Mischungen. Unter Mischungen sind sowohl Blends, der vorstehend beschriebenen erfindungsgemäßen Copolyamidformmassen in beliebigen Mischungsverhältnissen, als auch Gemische der erfindungsgemäßen Copolyamidformmassen und/oder deren Blends mit weiteren Polyamiden zu verstehen, wobei diese weiteren Polyamide zu maximal 20 Gew.-%, bevorzugt zu maximal 10 Gew.-%, bezogen auf das gesamte Gemisch enthalten sind.

Diese weiteren Polyamide können teilkristallin, mikrokristallin oder amorph sein.

Bevorzugt werden diese weiteren Polyamide ausgewählt aus der Gruppe von Polyamiden bestehend aus PA 6, PA 69, PA 610, PA 612, PA 614, PA 1010, PA 1212, PA 6/66/12, PA 6/66, PA 6/12, PA 11, PA 12, PA 6I/6T, PA MXDI/6I, PA MXDI/MXDT/6I/6T, PA MACM12, PA MACM14, PA MACM18, PA PACM12, PA PACM14, PA PACM18, PA 6I/6T/MACMI/MACMT, PA 6-3-T, PA MACMI/12, PA MACMT/12, Polyetheramide, Polyetheresteramide und deren Mischungen oder Copolymere.

Die relative Viskosität (gemessen gemäß ISO 307 in m-Kresol) der erfindungsgemäßen Copolyamidformmasse beträgt 1.35 bis 2.15, bevorzugt 1.40 bis 2.0, besonders bevorzugt 1.45 bis 1.95, ganz besonders bevorzugt 1.50 bis 1.90.

In einer bevorzugten Ausführungsform weist die erfindungsgemäße Copolyamidformmasse eine Kerbschlagzähigkeit, gemessen gemäß ISO 179 an konditionierten Prüfstäben von mindestens 9 kJ/m² auf.

Weiter vorteilhaft ist dabei, wenn die erfindungsgemäße Copolyamidformmasse eine Glasübergangstemperatur, gemessen gemäß ISO 11357 von mindestens 165 °C, bevorzugt von 165 bis 215 °C, besonders bevorzugt von 170 bis 210 °C, ganz besonders bevorzugt von 190 bis 210 °C aufweist.

Vorteilhaft ist zudem eine Spannungsrissbeständigkeit in Toluol, gemessen gemäß DIN 53449 an trockenen Prüfkörpern von mindestens 15 MPa, bevorzugt von mindestens 20 MPa, besonders bevorzugt von mindestens 25 MPa.

Eine weitere bevorzugte Ausführungsform der Erfindung sieht vor, dass die Reißdehnung, gemessen gemäß ISO 527 an konditionierten Prüfstäben mindestens 20 %, bevorzugt mindestens 30 % beträgt.

Ferner ist besonders bevorzugt, wenn er Zug-E-Modul, gemessen gemäß ISO 527 an konditionierten Prüfstäben mindestens 1700 MPa, bevorzugt mindestens 1800 MPa, besonders bevorzugt mindestens 2000 MPa beträgt.

Eine besonders bevorzugte Ausführungsform der vorliegenden Erfindung sieht vor, dass die aliphatische Dicarbonsäure, die bei der Herstellung der erfindungsgemäßen Copolyamidformmassen verwendet wird, ausgewählt ist aus der Gruppe bestehend aus Dicarbonsäuren mit 6, 7, 8, 9, 10, 11, 12, 13 und 14 Kohlenstoffatomen und deren Mischungen.

Eine weitere besonders bevorzugte Ausführungsform der vorliegenden Erfindung sieht vor, dass die aliphatische Dicarbonsäure, die bei der Herstellung der erfindungsgemäßen Copolyamidformmassen verwendet wird, ausgewählt ist aus der Gruppe bestehend aus Dicarbonsäuren mit 9, 10, 11, 12, 13 und 14 Kohlenstoffatomen und deren Mischungen.

Eine weitere besonders bevorzugte Ausführungsform der vorliegenden Erfindung sieht vor, dass die aliphatische Dicarbonsäure, die bei der Herstellung der erfindungsgemäßen Copolyamidformmassen verwendet wird, ausgewählt ist aus der Gruppe bestehend aus Dicarbonsäuren mit 9, 10, 11 und 12 Kohlenstoffatomen und deren Mischungen.

Eine weitere besonders bevorzugte Ausführungsform der vorliegenden Erfindung sieht vor, dass die aliphatische Dicarbonsäure, die bei der Herstellung der erfindungsgemäßen Copolyamidformmassen verwendet wird, ausgewählt ist aus der Gruppe bestehend aus Azelainsäure (9 Kohlenstoffatome), Sebazinsäure (10 Kohlenstoffatome), Dodecandisäure (12 Kohlenstoffatome), Tetradecandisäure (14 Kohlenstoffatome) und deren Mischungen.

Hierbei ist es insbesondere bevorzugt, wenn lediglich eine einzige aliphatische Dicarbonsäure verwendet wird.

Eine besonders bevorzugte weitere Ausführungsform der vorliegenden Erfindung sieht vor, dass die einzige aliphatische Dicarbonsäure, die bei der Herstellung der erfindungsgemäßen Copolyamidformmassen verwendet wird, ausgewählt ist aus der Gruppe bestehend aus Azelainsäure (9 Kohlenstoffatome), Sebazinsäure (10 Kohlenstoffatome), Dodecandisäure (12 Kohlenstoffatome) und-Tetradecandisäure (14 Kohlenstoffatome).

In einer weiteren Ausführungsform ist bei den erfindungsgemäßen transparenten amorphen Copolyamidformmasse insbesondere bevorzugt, dass die einzige aliphatische Dicarbonsäure, die bei der Herstellung der erfindungsgemäßen Copolyamidformmassen verwendet wird, ausgewählt ist aus der Gruppe bestehend aus Azelainsäure (9 Kohlenstoffatome), Sebazinsäure (10 Kohlenstoffatome) und Dodecandisäure (12 Kohlenstoffatome).

In einer weiteren Ausführungsform ist bei den erfindungsgemäßen transparenten, amorphen Copolyamidformmasse insbesondere die Azelainsäure (9 Kohlenstoffatome) bevorzugt.

In einer weiteren Ausführungsform ist bei den erfindungsgemäßen transparenten, amorphen Copolyamidformmasse insbesondere die Sebazinsäure (10 Kohlenstoffatome) bevorzugt.

In einer weiteren Ausführungsform ist bei den erfindungsgemäßen transparenten, amorphen Copolyamidformmasse insbesondere die Dodecandisäure (12 Kohlenstoffatome) bevorzugt.

Erfindungsgemäß ist vorgesehen, dass das zur Polykondensation eingesetzte Gemisch aus der mindestens einen aliphatischen Dicarbonsäure und der mindestens einen aromatischen Dicarbonsäure zu
a) 15 bis 38 Mol-%, bevorzugt 20 bis 36 Mol-%, besonders bevorzugt 20 bis 30 Mol-% aus mindestens einer aliphatischen Dicarbonsäure, und zu
b) 12 bis 35 Mol-%, bevorzugt 14 bis 30 Mol-%, besonders bevorzugt 20 bis 30 Mol-% aus der mindestens einen aromatischen Dicarbonsäure
besteht.

Bei den zuvor angegebenen Mengenangaben der Monomere der erfindungsgemäßen Copolyamide addieren sich die Anteile aller Monomere zu 100 Mol-%, wobei der molare Anteil des Diamins gleich der Summe der molaren Anteile der Dicarbonsäuren ist. Insofern sind weitere Monomere, insbesondere Lactame und/oder ω-Aminocarbonsäuren ausgeschlossen.

Die zuvor genannten Mengenangaben bezüglich der Dicarbonsäuren - wie auch alle weiteren Mengenangaben der Dicarbonsäuren bzw. Diamine - sind dabei so zu verstehen, dass sich ein entsprechendes Molverhältnis dieser bei der Polykondensation eingesetzten Edukte auch in den derart durch Polykondensation hergestellten Copolyamidformmassen wiederfindet.

Bei den aliphatischen Dicarbonsäuren handelt es sich bevorzugt um lineare aliphatische Dicarbonsäuren und nicht um cycloaliphatische Dicarbonsäuren.

Die mindestens eine aromatische Dicarbonsäure ist in einer bevorzugten Ausführungsform ausgewählt aus Isophthalsäure, Terephthalsäure oder Naphthalindicarbonsäure allein oder stellt ein Gemisch aus Isophthalsäure und Terephthalsäure, Isophthalsäure und Naphthalindicarbonsäure oder Isophthalsäure, Terephthalsäure und Naphthalindicarbonsäure dar.

Bei der zuvor genannten Ausführungsform ist es dabei insbesondere bevorzugt, wenn die mindestens eine aromatische Dicarbonsäure ein Gemisch aus Isophthalsäure und Terephthalsäure und/oder Naphthalindicarbonsäure ist, wobei bevorzugt das molare Verhältnis von Isophthalsäure zu Terephthalsäure und/oder Naphthalindicarbonsäure 5:1 bis 1:1.2 beträgt.

Ganz besonders bevorzugt ist dabei eine Copolyamidformmasse, herstellbar durch Polykondensation von 3,3'-Dimethyl-4,4'-diaminocyclohexylmethan (DMDC) mit einem Gemisch aus 1,12-Dodecandisäure und Isophthalsäure und/oder Terephthalsäure, d. h. eine Copolyamidformmasse, die aus Wiederholungseinheiten besteht, welche aus den zuvor genannten Monomeren abgeleitet sind.

Zur Herstellung einer derartigen Copolyamidformmasse werden insbesondere 50 Mol-% 3,3'-Dimethyl-4,4'-diaminocyclohexylmethan und ein Gemisch aus 15 bis 38 Mol-% 1,12-Dodecandisäure und 12 bis 35 Mol-% aus Isophthalsäure und/oder Terephthalsäure verwendet, d.h. der Diaminanteil in der Copolyamidformmasse beträgt 50 Mol-% und der Dicarbonsäureanteil beträgt und
5 bis 16 Mol-%, bevorzugt 6 bis 12 Mol-% aus Terephthalsäure, mit der Maßgabe dass Dodecandisäure, Isophthalsäure und Terephthalsäure so gewählt sind, dass sich 50 Mol-% ergeben.

Bei der Herstellung des erfindungsgemäßen Copolyamids wird auf den Einsatz von Lactamen und/oder α,ω-Aminocarbonsäuren verzichtet, d.h. das erfindungsgemäße Copolyamid ist frei von Wiederholungseinheiten abgeleitet von Lactamen und/oder α,ω-Aminocarbonsäuren.

In einer speziell bevorzugten Ausführungsform wird bei der Herstellung des erfindungsgemäßen Copolyamids nur ein einziges Diamin eingesetzt.

In einer weiteren speziell bevorzugten Ausführungsform handelt es sich bei dem einzigen Diamin um 3,3'-Dimethyl-4,4'-diaminocyclohexylmethan.

In einer weiteren speziell bevorzugten Ausführungsform handelt es sich bei dem einzigen Diamin um 3,3',5,5'-Tetramethyl-4,4'-diaminocyclohexylmethan.

Erfindungsgemäß wird ebenso ein Formkörper oder eine Beschichtung angegeben, der eine erfindungsgemäße Copolyamidformmasse enthält oder hieraus besteht.

Beispiele für erfindungsgemäße Formkörper sind dabei korrigierende Linsen, nicht korrigierende Linsen, Sonnenlinsen, Brillenbügel, Brillenfassungen, Schutzbrillen, Visiere, Gläser, Scheiben, Uhrengläser, Scheiben für Lampen, Schutzhelme, Griffe, Verschlüsse, insbesondere Textilverschlüsse, Messinstrumente, Durchflussmesser, Filtertassen, Augenschutz aller Art, Dekorteile aller Art, Lupen, Linsensysteme, Kameralinsen, Linsen für LED's, Displays, beipielsweise für Elektrogeräte, Elektronikgeräte, Elektrobauteile oder Elektronikbauteile, z.B. für Mobiltelefone, Spielkonsolen, Kameras, Laser-, Entfernungsmess- oder GPS-Geräte, Gehäuse für Apparate bzw. Gegenstände jeder Art, z.B. für tragbare Telefone mit oder ohne integrierte Displays, Uhren, Lampen, Filter, CD's oder DVD's, Lichtwellenleiter, Lichtkoppler, Lichtverstärker, Lichtverteiler, Schutzhüllen für Lichtwellenleiter und mono- oder mehrschichtige Folien, Behälter oder Rohre.

Die erfindungsgemäßen Copolyamidformmassen eignen sich ebenso zur Herstellung der zuvor genannten Formkörper.

Die erfindungsgemäßen Copolyamidformmassen können vor allem in den Bereichen Industrie, Haushalt, Sanitär, Optik, Uhren, Elektro, Elektronik, Beleuchtung, Fahrzeuge, Maschinenbau, Verpackung, Mode, Textil, Sport und Freizeit, Mess- und Prüfmittel, Spielwaren und Design zur Herstellung von transparenten Formkörpern oder transparenten Beschichtungen verwendet werden.

Die erfindungsgemäßen Copolyamidformmassen können selbstverständlich, wie an und für sich im Stand der Technik schon bekannt, Zusatzstoffe enthalten.

Den erfindungsgemäßen Copolyamidformmassen können 0 bis 6 Gew.-%, bevorzugt 0,005 bis 6 Gew.-%, besonders bevorzugt 0,01 bis 5 Gew.-% Zusatzstoffe, bezogen auf die gesamte Copolyamidformmasse, zugesetzt werden. Die Menge jedes einzelnen Zusatzstoffs beträgt maximal 3 Gew.-%.

In einer weiteren ganz besonders bevorzugten Ausführungsform können der Copolyamidformmasse 0,01 bis 4 Gew.-% Zusatzstoffe hinzugefügt werden, wobei die Menge jedes einzelnen Zusatzstoffs maximal 3 Gew.-% beträgt.

Bevorzugte Zusatzstoffe sind ausgewählt aus der Gruppe bestehend aus Kondensationskatalysatoren, Kettenreglern, Entschäumern, anorganischen Stabilisatoren, organischen Stabilisatoren, Gleitmitteln, Farbstoffen, Markierungsmitteln, Pigmenten, photochromen Farbstoffen, Antistatika, Entformungsmitteln, optischen Aufhellern, natürlichen Schichtsilikaten, synthetischen Schichtsilikaten und deren Mischungen.

Die Einstellung der relativen Viskosität und damit der Molmasse der erfindungsgemäßen Copolyamidformmassen kann in an sich bekannter Weise z.B. über monofunktionelle Amine oder Carbonsäuren und/oder difunktionelle Diamine oder Dicarbonsäuren als Kettenregler erfolgen. Bevorzugte Kettenregler sind Benzoesäure, Essigsäure, Propionsäure oder 2,2,6,6-Tetramethyl-4-piperidinamin.

Als Stabilisatoren bzw. Alterungsschutzmittel können in den erfindungsgemäßen Copolyamidformmassen, z.B. Antioxidantien, Antiozonantien, Lichtschutzmittel, UV-Stabilisatoren, UV-Absorber oder UV-Blocker eingesetzt werden.

Die Zusatzstoffe können den Copolyamidformmassen direkt oder als Masterbatch mit bevorzugt Polyamid als Trägermaterial zugegeben werden. Dies kann in an sich bekannter Weise geschehen, z.B. während der Polykondensation oder anschließend in einer Extrusion.

Die vorliegende Erfindung wird anhand der nachfolgenden Beispiele und Ausführungen näher beschrieben, ohne die Erfindung auf die konkret dargestellten Parameter zu beschränken.

Die Herstellung der erfindungsgemäßen transparenten Copolyamide erfolgt in an sich bekannter Weise in bekannten, rührbaren Druckautoklaven mit einem Vorlagegefäss und einem Reaktionsgefäss:
Im Vorlagegefäß wird deionisiertes Wasser vorgelegt und die Monomere und Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäss gepumpt und dort auf die gewünschte Reaktionstemperatur von 260 bis 350 °C bei einem Druck von maximal 30 bar aufgeheizt. Der Ansatz wird in der Druckphase für 2 bis 4 Stunden auf der Reaktionstemperatur gehalten. In der anschliessenden Entspannungsphase wird der Druck innerhalb von 1 bis 2 Stunden auf atmosphärischen Druck reduziert, wobei die Temperatur leicht sinken kann.

In der folgenden Entgasungsphase wird der Ansatz bei atmosphärischem Druck für 0.5 bis 1 Stunden auf einer Temperatur von 270 bis 350 °C gehalten. Die Polymerschmelze wird in Strangform ausgetragen, im Wasserbad bei 15 bis 80 °C abgekühlt und granuliert. Das Granulat wird für 12 Stunden bei 80 bis 120 °C unter Stickstoff oder im Vakuum auf einen Wassergehalt von weniger als 0.1 Gew.-% getrocknet.

Zur Herstellung der in den Beispielen und Vergleichsbeispielen beschriebenen Copolyamide werden die folgenden Monomere (Tabelle 1) und Zusatzstoffe (Tabelle 2) verwendet:

**Tabelle 1**

| **Monomer** | **Schmelz bereich [°C]** | **Hersteller** |
|---|---|---|
| 3,3'-dimethyl-4,4'-diaminodicyclohexylmethan | - 7 bis - 0.6* | BASF AG, Deutschland |
| Dodecandisäure | 128 bis 132 | Invista Nederland B.V., Niederlande |
| Isophthalsäure | 345 bis 348 | Flint Hills Resources, Schweiz |
| Terephthalsäure | > 400 | BP Amoco Chemical Company, USA |
| Laurinlactam | 149 bis 153 | EMS-CHEMIE AG, Schweiz |

| | | |
|---|---|---|
| * Gefrierbereich nach ASTM D1015-55 | | |

**Tabelle 2**

| **Zusatzstoff** | **Produkt** | **Hersteller** |
|---|---|---|
| Kettenregler | Benzoesäure | SysKem Chemie GmbH, Deutschland |
| Kondensationskatalysator | Phosphonsäure | Honeywell Specialty Chemicals, Deutschland |
| Entschäumer | Antifoam RD 10 Gew.-% Emulsion | Dow Corning S.A., Belgien |

Die Messungen wurden nach den folgenden Normen und an den folgenden Prüfkörpern durchgeführt.
Zug-E-Modul:
   ISO 527 mit einer Zuggeschwindigkeit von 1 mm/min
   ISO-Zugstab, Norm: ISO/CD 3167, Typ A1, 170 x 20/10 x 4 mm
   Temperatur 23 °C
Reißfestigkeit und Reißdehnung:
   ISO 527 mit einer Zuggeschwindigkeit von 50 mm/min
   ISO-Zugstab, Norm: ISO/CD 3167, Typ A1, 170 x 20/10 x 4 mm
   Temperatur 23 °C
Schlagzähigkeit nach Charpy:
   ISO 179/*eU
   ISO-Prüfstab, Norm: ISO/CD 3167, Typ B1, 80 x 10 x 4 mm
   Temperatur 23 °C
   * 1 = nicht instrumentiert, 2 = instrumentiert
Kerbschlagzähigkeit nach Charpy:
   ISO 179/*eA
   ISO-Prüfstab, Norm: ISO/CD 3167, Typ B1, 80 x 10 x 4 mm
   Temperatur 23 °C
   * 1 = nicht instrumentiert, 2 = instrumentiert
Glasübergangstemperatur (Tg), Schmelzpunkt und Schmelzwärme
   ISO-Norm 11357
   Granulat

   Die Differential Scanning Calorimetry (DSC) wurde mit dem Gerät DSC 2920 der Firma TA Instruments mit einer Aufheizrate von 20 K/min und einer Abkühlrate von 5 K/min durchgeführt. Das Thermogramm wurde mit dem Programm Universal Analysis 2000 der Firma TA Instruments ausgewertet. Der Mittelpunkt des Glasübergangsbereichs, welche als Glasübergangstemperatur angegeben wird, wurde nach der Methode "half height" ermittelt.
Spannungsrissbeständigkeit:
   DIN 53449
   ISO-Zugstab, Norm: ISO/CD 3167, Typ A1, 170 x 20/10 x 4 mm
   Temperatur 23 °C

   Zur Umrechnung der gemessenen Randfaserdehnung in eine Spannung wird der erhaltene Prozentwert mit dem Zug-E-Modul (trocken, MPa) des vermessenen Materials multipliziert.
Transparenz:
   ASTM D 1003
   Rundplatte, Dicke 2 mm, Radius 37,5 mm
   Temperatur 23 °C

   Messgerät Haze Gard plus der Firma Byk Gardner mit CIE Lichtart C. Der Lichttransmissionswert wird in % der eingestrahlten Lichtmenge angegeben.
Kratzfestigkeit:
   ASTM D3363-05
   ISO-Prüfplättchen, Norm: ISO 294-3, Typ D2, 60 x 60 x 2 mm
   Temperatur 23 °C

   Die Bestimmung erfolgt mittels eines Scratch Hardness Testers Model 291 der Firma Erichsen und einem Satz Bleistifte Koh-I-Nor 1500.
Relative Viskosität
   ISO 307
   0,5 g in 100 ml Lösungsmittel in m-Kresol
   Temperatur 20 °C

   Berechnung der relativen Viskosität (RV) nach RV = t/t₀ in Anlehnung an Abschnitt 11 der Norm.

Die Prüfkörper werden auf einer Spritzgussmaschine der Firma Arburg, Modell Allrounder 420 C 1000-250 hergestellt. Dabei werden Zylindertemperaturen zwischen 170 und 260 °C verwendet. Die Formtemperatur beträgt 80 °C. Bei den Platten für die Transmissionsmessung und die Kratzfestigkeitsbestimmung werden polierte Formen verwendet.

Werden konditionierte Prüfkörper verwendet, werden sie zur Konditionierung nach ISO 1110 für 14 Tage bei 72 °C und 62 % relativer Feuchte gelagert. Werden die Prüfkörper im trockenen Zustand verwendet (bei Messung der Spannungsrissbeständigkeit und der Transmission), werden sie nach dem Spritzguss mindestens 48 h bei Raumtemperatur in trockener Umgebung gelagert, d.h. über Silicagel.

In den unten abgebildeten Tabellen 3 und 4 werden die erfindungsgemäßen Beispiele (Tabelle 3) den Vergleichsbeispielen (Tabelle 4) gegenübergestellt.

**Tabelle 3**

| | | **Beispiele** | | | |
|---|---|---|---|---|---|
| **Komponente** | **Einheit** | **1** | **2** | **3** | Gew.-% |
| 3,3'-dimethyl-4,4'-diaminodicyclohexylmethan | Mol-% | 50 | 50 | 50 | 99,7 |
| Dodecandisäure | Mol-% | 23 | 36 | 23 | |
| Isophthalsäure | Mol-% | 27 | 14 | 19 | |
| Terephthalsäure | Mol-% | - | - | 8 | |
| Kettenregler | Gew.-% | 0,25 | 0,25 | 0,25 | 0,3 |
| Kondensationskatalysator | Gew.-% | 0,03 | 0,03 | 0,03 | |
| Entschäumer | Gew.-% | 0,02 | 0,02 | 0,02 | |

| **Werte** | | | | | |
|---|---|---|---|---|---|
| Schlagzähigkeit, 23 °C, konditioniert | kJ/m² | 130 | kB* | kB* | |
| Kerbschlagzähigkeit, 23 °C, konditioniert | kJ/m² | 10 | 12 | 12 | |
| | | | | | |
| Kratzfestigkeit, konditioniert | - | 2H | H | 2H | |
| | | | | | |
| Spannungsrissbeständigkeit in Toluol, trocken | MPa | 26 | 22 | 38 | |
| Glasübergangstemperatur | °C | 201 | 178 | 205 | |
| | | | | | |
| Zug-E-Modul, konditioniert | MPa | 2170 | 1835 | 2125 | |
| Reißdehnung, konditioniert | % | 32 | 101 | 91 | |
| | | | | | |
| Transparenz, 2 mm, trocken | % | 93,3 | 93,5 | 93,2 | |
| * kein Bruch | | | | | |

**Tabelle 4**

| | | **Vergleichsbeispiele** | | | | | |
|---|---|---|---|---|---|---|---|
| **Komponente** | **Einheit** | **4** | **5** | **6** | **7** | **8** | **Gew.-%** |
| 3,3'-dimethyl-4,4'-diaminodicyclohexylmethan | Mol-% | 50 | 50 | 50 | 33 | 39 | 99,7 |
| Dodecandisäure | Mol-% | 50 | 45 | 10 | - | 18 | |
| Isophthalsäure | Mol-% | - | 5 | 40 | 33 | 15 | |
| Terephthalsäure | Mol-% | - | - | - | - | 6 | |
| Laurinlactam | Mol-% | - | - | - | 34 | 22 | |
| Kettenregler | Gew.-% | 0,25 | 0,25 | 0,25 | 0,25 | 0,25 | 0,3 |
| Kondensationskatalysator | Gew.-% | 0,03 | 0,03 | 0,03 | 0,03 | 0,03 | |
| Entschäumer | Gew.-% | 0,02 | 0,02 | 0,02 | 0,02 | 0,02 | |

| **Werte** | | | | | | | |
|---|---|---|---|---|---|---|---|
| Schlagzähigkeit, 23 °C, konditioniert | kJ/m² | kB* | kB* | 50 | kB* | kB* | |
| Kerbschlagzähigkeit, 23 °C, konditioniert | kJ/m² | 12 | 12 | 5 | 7 | 10 | |
| | | | | | | | |
| Kratzfestigkeit, konditioniert | - | F | F | 2H | HB | F | |
| | | | | | | | |
| Spannungsrissbeständigkeit in Toluol, trocken | MPa | 55 | 10 | 35 | 22 | 23 | |
| | | | | | | | |
| Glasübergangstemperatur | °C | 154 | 160 | 235 | 162 | 162 | |
| | | | | | | | |
| Zug-E-Modul, konditioniert | MPa | 1550 | 1700 | 2400 | 2215 | 1930 | |
| Reißdehnung, konditioniert | % | 103 | 100 | 5 | 126 | 115 | |
| | | | | | | | |
| Transparenz, 2 mm, trocken | % | 93,5 | 93,6 | 93,0 | 93,1 | 93,3 | |
| * kein Bruch | | | | | | | |

Erkennbar ist, dass die erfindungsgemäßen Copolyamide ein deutlich ausgeglicheneres Eigenschaftsprofil wie die Vergleichsbeispielen aufweisen. Insbesondere die Kratzfestigkeit zeigt dabei bessere Werte als die Kratzfestigkeit der Vergleichsbeispiele. Gleichzeitig mit der hohen Kratzfestigkeit geht dabei überraschender Weise eine hohe Zähigkeit gemessen sowohl als Schlagzähigkeit als auch Kerbschlagzähigkeit bei einer ausgezeichneten Spannungsrissbeständigkeit und hoher Transparenz einher, wobei auch die Reißdehnung ausgezeichnete Werte aufweist. Die erfindungsgemäßen Copolyamidformmassen weisen somit ein äußerst ausgeglichenes Eigenschaftsprofil bei hoher Kratzfestigkeit auf. Des Weiteren können bei den erfindungsgemäßen Copolyamiden auch Glasübergangstemperaturen über 190 °C realisiert werden.

## Patentansprüche

1. Transparente, kratzfeste und zähe Copolyamidformmasse, herstellbar durch Polykondensation von 3,3'-Dimethyl-4,4'-diaminocyclohexylmethan (DMDC) mit einem Carbonsäuregemisch, bestehend aus mindestens einer aliphatischen Dicarbonsäure mit 6 bis 18 Kohlenstoffatomen und mindestens einer aromatischen Dicarbonsäure, ausgewählt aus der Gruppe bestehend aus Isophthalsäure, Terephthalsäure und/oder Naphthalindicarbonsäure, **gekennzeichnet durch** eine Kratzfestigkeit von größer oder gleich Stufe H, gemessen nach ASTM D3363-05,
**dadurch** gekennzeichnet,
dass das Gemisch aus der mindestens einen aliphatischen Dicarbonsäure und der mindestens einen aromatischen Dicarbonsäure zu
a) 15 bis 38 Mol-% aus der mindestens einen aliphatischen Dicarbonsäure, und zu
b) 12 bis 35 Mol-% aus der mindestens einen aromatischen Dicarbonsäure
besteht, wobei sich die Anteile aller Monomere zu 100 mol-% addieren und der molare Anteil von 3,3'-Dimethyl-4,4'-diaminocyclohexylmethan (DMDC) gleich der Summe der molaren Anteile der Dicarbonsäuren ist.

2. Copolyamidformmasse nach Anspruch 1, **gekennzeichnet durch** eine Kerbschlagzähigkeit von mindestens 9 kJ/m².

3. Copolyamidformmasse nach einem der vorhergehenden Ansprüche, **gekennzeichnet durch** eine Glasübergangstemperatur von mindestens 165 °C.

4. Copolyamidformmasse nach einem der vorhergehenden Ansprüche, **gekennzeichnet durch** eine Spannungsrissbeständigkeit in Toluol von mindestens 15 MPa.

5. Copolyamidformmasse nach einem der vorhergehenden Ansprüche, **gekennzeichnet durch** eine Reißdehnung von mindestens 20 %.

6. Copolyamidformmasse nach einem der vorhergehenden Ansprüche, **gekennzeichnet durch** einen Zug-E-Modul von mindestens 1700 MPa.

7. Copolyamidformmasse nach einem der vorhergehenden Ansprüche, **dadurch gekennzeichnet, dass** die aliphatische Dicarbonsäure ausgewählt ist aus der Gruppe bestehend aus Dicarbonsäuren mit 6, 7, 8, 9, 10, 11, 12, 13 oder 14 Kohlenstoffatomen.

8. Copolyamidformmasse nach einem der vorhergehenden Ansprüche, **dadurch gekennzeichnet, dass** das Gemisch aus der mindestens einen aliphatischen Dicarbonsäure und der mindestens einen aromatischen Dicarbonsäure zu
a) 20 bis 36 Mol-%aus mindestens einer aliphatischen Dicarbonsäure, und zu
b) 14 bis 30 Mol-% aus der mindestens einen aromatischen Dicarbonsäure
besteht.

9. Copolyamidformmasse nach einem der vorhergehenden Ansprüche, **dadurch gekennzeichnet, dass** die mindestens eine aromatische Dicarbonsäure Isophthalsäure, Terephthalsäure oder Naphthalindicarbonsäure oder ein Gemisch aus Isophthalsäure und Terephthalsäure, Isophthalsäure und Naphthalindicarbonsäure oder Isophthalsäure, Terephthalsäure und Naphthalindicarbonsäure ist.

10. Copolyamidformmasse nach vorhergehendem Anspruch, **dadurch gekennzeichnet, dass** die mindestens eine aromatische Dicarbonsäure ein Gemisch aus Isophthalsäure und Terephthalsäure und/oder Naphthalindicarbonsäure ist, wobei das molare Verhältnis von Isophthalsäure zu Terephthalsäure und/oder Naphthalindicarbonsäure 5:1 bis 1:1.2 beträgt.

11. Copolyamidformmasse nach einem der vorhergehenden Ansprüche, herstellbar durch Polykondensation von 3,3'-Dimethyl-4,4'-diaminocyclohexylmethan (DMDC) mit einem Gemisch aus 1,12-Dodecandisäure und Isophthalsäure und/oder Terephthalsäure.

12. Copolyamidformmasse nach vorhergehendem Anspruch, **dadurch gekennzeichnet, dass** das Gemisch zu 15 bis 38 Mol-% 1,12-Dodecandisäure und 12 bis 35 Mol-% aus Isophthalsäure und/oder Terephthalsäure besteht.

13. Copolyamidformmasse nach einem der beiden vorhergehenden Ansprüche, **dadurch gekennzeichnet, dass** das Gemisch
a) zu 20 bis 28 Mol-%aus 1,12-Dodecandisäure und zu 22 bis 30 Mol-%aus Isophthalsäure,
b) zu 32 bis 38 Mol-%aus 1,12-Dodecandisäure und zu 12 bis 18 Mol-%aus Isophthalsäure, oder
c)
20 bis 28 Mol-%aus 1,12-Dodecandisäure,
14 bis 25 Mol-%aus Isophthalsäure, und
5 bis 16 Mol-%aus Terephthalsäure,
mit der Maßgabe dass Dodecandisäure, Isophthalsäure und
Terephthalsäure so gewählt sind, dass sich 50 Mol-% ergeben, besteht.

14. Formkörper oder Beschichtung, enthaltend oder bestehend aus einer Copolyamidformmasse nach einem der vorhergehenden Ansprüche.

15. Formkörper nach vorhergehendem Anspruch in Form von korrigierenden Linsen, nicht korrigierenden Linsen, Sonnenlinsen, Brillenbügeln, Brillenfassungen, Schutzbrillen, Visieren, Gläsern, Scheiben, Uhrengläsern, Scheiben für Lampen, Schutzhelmen, Griffen, Verschlüssen, insbesondere Textilverschlüssen, Messinstrumenten, Durchflussmessern, Filtertassen, Augenschutz aller Art, Dekorteile aller Art, Lupen, Linsensystemen, Kameralinsen, Linsen für LED's, Displays, Gehäusen für Apparate bzw. Gegenstände jeder Art, und mono- oder mehrschichtige Folien, Behältern oder Rohren.

16. Verwendung einer Copolyamidformmasse nach einem der Ansprüche 1 bis 13 zur Herstellung von Formkörpern oder Beschichtungen, korrigierenden Linsen, nicht korrigierenden Linsen, Sonnenlinsen, Brillenbügeln, Brillenfassungen, Schutzbrillen, Visieren, Gläsern, Scheiben, Uhrengläsern, Scheiben für Lampen, Schutzhelmen, Griffen, Verschlüssen, insbesondere Textilverschlüssen, Messinstrumenten, Durchflussmessern, Filtertassen, Augenschutz aller Art, Dekorteile aller Art, Lupen, Linsensystemen, Kameralinsen, Linsen für LED's, Displays, Gehäusen für Apparate bzw. Gegenstände jeder Art, und mono- oder mehrschichtige Folien, Behältern oder Rohren.

## Claims

1. Transparent, scratch-resistant and tough copolyamide moulding compound, producible by polycondensation of 3,3'-dimethyl-4,4'-diaminocyclohexylmethane (DMDC) with a carboxylic acid mixture, consisting of at least one aliphatic dicarboxylic acid with 6 to 18 carbon atoms and at least one aromatic dicarboxylic acid, selected from the group consisting of isophthalic acid, terephthalic acid and/or naphthalenedicarboxylic acid, **characterised by** a scratch-resistance of greater than or equal to grade H, measured according to ASTM D3363-05
**characterized in that**
the mixture of the at least one aliphatic dicarboxylic acid and of the at least one aromatic dicarboxylic acid consists at
a) 15 to 38% by mol of at least one aliphatic dicarboxylic acid, and at
b) 12 to 35% by mol of at the least one aromatic dicarboxylic acid
the proportions of all the monomers adding up to 100% by mol and the molar proportion of the 3,3'-dimethyl-4,4'-diaminocyclohexylmethane (DMDC) being equal to the sum of the molar proportions of the dicarboxylic acids.

2. Copolyamide moulding compound according to claim 1, **characterised by** a notch impact strength of at least 9 kJ/m².

3. Copolyamide moulding compound according to one of the preceding claims, **characterised by** a glass transition temperature of at least 165°C.

4. Copolyamide moulding compound according to one of the preceding claims, **characterised by** a stress-cracking resistance in toluene of at least 15 MPa.

5. Copolyamide moulding compound according to one of the preceding claims, **characterised by** a breaking elongation of at least 20%

6. Copolyamide moulding compound according to one of the preceding claims, **characterised by** a modulus of elasticity in tension of at least 1,700 MPa.

7. Copolyamide moulding compound according to one of the preceding claims, **characterised in that** the aliphatic dicarboxylic acid is selected from the group consisting of dicarboxylic acids with 6, 7, 8, 9, 10, 11, 12, 13 or 14 carbon atoms.

8. Copolyamide moulding compound according to one of the preceding claims, **characterised in that** the mixture of the at least one aliphatic dicarboxylic acid and of the at least one aromatic dicarboxylic acid consists at
a) 20 to 36% by mol of at least one aliphatic dicarboxylic acid, and at
b) 14 to 30% by mol of at the least one aromatic dicarboxylic acid.

9. Copolyamide moulding compound according to one of the preceding claims, **characterised in that** the at least one aromatic dicarboxylic acid is isophthalic acid, terephthalic acid or naphthalenedicarboxylic acid or a mixture of isophthalic acid and terephthalic acid, isophthalic acid and naphthalenedicarboxylic acid or isophthalic acid, terephthalic acid and naphthalenedicarboxylic acid.

10. Copolyamide moulding compound according to the preceding claim, **characterised in that** the at least one aromatic dicarboxylic acid is a mixture of isophthalic acid and terephthalic acid and/or naphthalenedicarboxylic acid, the molar ratio of isophthalic acid to terephthalic acid and/or naphthalenedicarboxylic acid being 5 : 1 to 1 : 1.2.

11. Copolyamide moulding compound according to one of the preceding claims, producible by polycondensation of 3,3'-dimethyl-4,4'-diaminocyclohexylmethane (DMDC) with a mixture of 1,12-dodecanoic diacid and isophthalic acid and/or terephthalic acid.

12. Copolyamide moulding compound according to the preceding claim, **characterised in that** the mixture is consists at 15 to 38% by mol of 1,12-dodecanoic diacid and 12 to 35% by mol of isophthalic acid and/or terephthalic acid.

13. Copolyamide moulding compound according to one of the two preceding claims, **characterised in that** the mixture consists
a) at 20 to 28% by mol of 1,12-dodecanoic diacid and at 22 to 30% by mol of isophthalic acid,
b) at 32 to 38% by mol of 1,12 dodecanoic diacid and at 12 to 18% by mol of isophthalic acid, or
c)
20 to 28% by mol of 1,12-dodecanoic diacid,
14 to 25% by mol of isophthalic acid
and
5 to 16% by mol of terephthalic acid,
with the proviso that dodecanoic diacid, isophthalic acid and terephthalic acid are chosen such that the result is 50% by mol.

14. Moulded article or coating, comprising or consisting of a copolyamide moulding compound according to one of the preceding claims.

15. Moulded article according to the preceding claim in the form of correcting lenses, non-correcting lenses, lenses for sunglasses, spectacle bows, spectacle frames, safety glasses, visors, glasses, glass panes, clock glasses, glass for lamps, protective helmets, handles, fasteners, in particular textile fasteners, measuring instruments, flow meters, filter cups, eye protection of all types, decorative parts of all types, magnifying glasses, lens systems, camera lenses, lenses for LEDs, displays, housings for apparatus or objects of every kind and mono- or multilayer films, containers or tubes.

16. Use of a copolyamide moulding compound according to one of the claims 1 to 13 for the production of moulded articles or coatings, correcting lenses, non-correcting lenses, lenses for sunglasses, spectacle bows, spectacle frames, safety glasses, visors, glasses, glass panes, clock glasses, glass for lamps, protective helmets, handles, fasteners, in particular textile fasteners, measuring instruments, flow meters, filter cups, eye protection of all types, decorative parts of all types, magnifying glasses, lens systems, camera lenses, lenses for LEDs, displays and mono- or multilayer films, containers or tubes.

## Revendications

1. Mélange à mouler de copolyamides, transparent, résistant à la rayure et tenace, pouvant être fabriqué par polycondensation de 3,3'-diméthyl-4,4'-diaminocyclohexylméthane (DMDC) avec un mélange d'acides carboxyliques constitué d'au moins un acide dicarboxylique aliphatique ayant 6 à 18 atomes de carbone et d'au moins un acide dicarboxylique aromatique choisi dans le groupe consistant en l'acide isophtalique, l'acide téréphtalique et/ou l'acide naphtalènedicarboxylique, **caractérisé par** une résistance à la rayure supérieure ou égale à une dureté H, mesurée selon ASTM D3363-05,
**caractérisé en ce que** le mélange du ou des acides dicarboxyliques et du ou des acides dicarboxyliques aromatiques est constitué de
a) 15 à 38 % en moles du ou des acides dicarboxyliques aliphatiques, et
b) 12 à 35 % en moles du ou des acides dicarboxyliques aromatiques,
la somme des proportions de l'ensemble des monomères faisant 100 % en moles, et la proportion en moles du 3,3'-diméthyl-4,4'-diaminocyclohexylméthane (DMDC) étant égale à la somme des proportions en moles des acides dicarboxyliques.

2. Mélange à mouler de copolyamides selon la revendication 1, **caractérisé par** une résistance au choc sur barreau entaillé d'au moins 9 kJ/m².

3. Mélange à mouler de copolyamides selon l'une des revendications précédentes, **caractérisé par** une température de transition vitreuse d'au moins 165 °C.

4. Mélange à mouler de copolyamides selon l'une des revendications précédentes, **caractérisé par** une résistance à la fissuration sous contrainte dans le toluène d'au moins 15 MPa.

5. Mélange à mouler de copolyamides selon l'une des revendications précédentes, **caractérisé par** un allongement à la rupture d'au moins 20 %.

6. Mélange à mouler de copolyamides selon l'une des revendications précédentes, **caractérisé par** un module d'élasticité en traction d'au moins 1700 MPa.

7. Mélange à mouler de copolyamides selon l'une des revendications précédentes, **caractérisé en ce que** l'acide dicarboxylique aliphatique est choisi dans le groupe consistant en les acides dicarboxyliques ayant 6, 7, 8, 9, 10, 11, 12, 13 ou 14 atomes de carbone.

8. Mélange à mouler de copolyamides selon l'une des revendications précédentes, **caractérisé en ce que** le mélange du ou des acides dicarboxyliques aliphatiques et du ou des acides dicarboxyliques aromatiques est constitué de
a) 20 à 36 % en moles d'au moins un acide dicarboxylique aliphatique, et
b) 14 à 30 % en moles d'au moins un acide dicarboxylique aromatique.

9. Mélange à mouler de copolyamides selon l'une des revendications précédentes, **caractérisé en ce que** le ou les acides dicarboxyliques aliphatiques sont l'acide isophtalique, l'acide téréphtalique ou l'acide naphtalènedicarboxylique ou un mélange d'acide isophtalique et d'acide téréphtalique, d'acide isophtalique et d'acide naphtalènedicarboxylique ou d'acide isophtalique, d'acide téréphtalique ou d'acide naphtalènedicarboxylique.

10. Mélange à mouler de copolyamides selon la revendication précédente, **caractérisé en ce que** le ou les acides dicarboxyliques aromatiques sont un mélange d'acide isophtalique et d'acide téréphtalique et/ou d'acide naphtalènedicarboxylique, le rapport en moles de l'acide isophtalique à l'acide téréphtalique et/ou à l'acide naphtalènedicarboxylique étant de 5:1 à 1:1,2.

11. Mélange à mouler de copolyamides selon l'une des revendications précédentes, pouvant être fabriqué par polycondensation de 3,3'-diméthyl-4,4'-diaminocyclohexylméthane (DMDC) avec un mélange d'acide 1,12-dodécanedioïque et d'acide isophtalique et/ou d'acide téréphtalique.

12. Mélange à mouler de copolyamides selon la revendication précédente, **caractérisé en ce que** le mélange est constitué de 15 à 38 % en moles d'acide 1,12-dodécanedioïque et de 12 à 35 % en moles d'acide isophtalique et/ou d'acide téréphtalique.

13. Mélange à mouler de copolyamides selon l'une des deux revendications précédentes, **caractérisé en ce que** le mélange est constitué
a) de 20 à 28 % en moles d'acide 1,12-dodécanedioïque et de 22 à 30 % en moles d'acide isophtalique,
b) de 32 à 38 % en moles d'acide 1,12-dodécanedioïque et de 12 à 18 % en moles d'acide isophtalique, ou
c)
de 20 à 28 % en moles d'acide 1,12-dodécanedioïque,
de 14 à 25 % en moles d'acide isophtalique, et
de 5 à 16 % en moles d'acide téréphtalique,
à la condition que l'acide dodécanedioïque, l'acide isophtalique et l'acide téréphtalique soient choisis de façon à faire en tout 50 % en moles.

14. Objet moulé ou revêtement contenant un mélange à mouler de copolyamides selon l'une des revendications précédentes, ou en étant constitué.

15. Objet moulé selon la revendication précédente sous forme de lentilles correctrices, de lentilles non correctrices, de lentilles solaires, de branches de lunettes, de montures de lunettes, de lunettes de protection, de visières, de verres, de disques, de verres de montre, de diffuseurs pour lampes, de casques de protection, de poignées, de fermetures, en particulier de fermetures textiles, d'instruments de mesure, de débitmètres, de bols de filtres, de protections oculaires de tous types, de pièces décoratives de tous types, de loupes, de systèmes de lentilles, de lentilles de caméras, de lentilles pour LED, de dispositifs d'affichage, de boîtiers pour appareils ou objets de tous types, et de feuilles, récipients et tubes mono- ou multicouches.

16. Utilisation d'un mélange à mouler de copolyamides selon l'une des revendications 1 à 13 pour la fabrication d'objets moulés ou de revêtements, de lentilles correctrices, de lentilles non correctrices, de lentilles solaires, de branches de lunettes, de montures de lunettes, de lunettes de protection, de visières, de verres, de disques, de verres de montre, de diffuseurs pour lampes, de casques de protection, de poignées, de fermetures, en particulier de fermetures textiles, d'instruments de mesure, de débitmètres, de bols de filtres, de protections oculaires de tous types, de pièces décoratives de tous types, de loupes, de systèmes de lentilles, de lentilles de caméras, de lentilles pour LED, de dispositifs d'affichage, de boîtiers pour appareils ou objets de tous types, et de feuilles, récipients et tubes mono- ou multicouches.
